# EUROPEAN PATENT APPLICATION

(11) **EP 2 270 454 A1**
(43) Date of publication of application: **05.01.2011**
(21) Application number: 09164274.4
(22) Date of filing: 01.07.2009
(51) Int. Cl.: G01K 7/42

(54) **Time of tap changer in the same contact position**

(71) Applicant: ABB Technology AG, 8050 Zürich (CH)
(72) Inventor: Andersson, Gunnar, 77014, Nyhammar (SE); Stenestam, Bengt-Olof, 771 42, Ludvika (SE)
(74) Representative: Kock, Ina

(57) **Abstract**

The present invention relates to a method for calculating a time period, for which time period a tap changer in a transformer is placed in the same position. The method comprising the steps of measuring the temperature of the cooling and isolating media surrounding said tap changer and measuring the current load in the tap changer. Further, from the measured values of the cooling and isolating media temperature and the current load is the contact temperature calculated. The temperature of the A-spots located in the contact surface is then calculated from the calculated contact temperature and the measured current load. An ageing acceleration is calculated from the calculated temperature of the A-spots, and a maximum time period for the tap changer to be in the same position is calculated from the calculated temperatures and said ageing acceleration.

## Description

### Technical Field

The present invention relates generally to tap changers for transformers and reactors, and in particular to a method of calculating the time a tap changer of a transformer may be in the same contact position without risk for carbonisation of the contacts.

### Background

In power transformers, on-load tap changers (OLTC) are used to change tapping taps connections of transformer windings while the transformer is energised. When the contacts of the tap changer have been in the same position to long time, there is a severe risk that carbonisation on the contacts will occur. When current flows in a contact, the actual current flow path is not over the whole surface of the contacts. Since no surface is smooth if studied close enough, the actual contact surfaces where the current flows is in specific points, so called Alfa-spots or A-spots, where the contact surfaces are in direct contact with each other. If the temperature in the A-spots is too high, the risk of carbonisation is increased.

### Summary of invention

It is an object of the invention to provide a method for calculating how long time the contact of the tap changer may be in one position limiting the risk of carbonisation of the contact surfaces.

This object is achieved by providing a method for calculating a time period, for which time period a tap changer in a transformer is placed in the same position. The method comprises the steps of measuring the temperature of the cooling and isolating media surrounding said tap changer and measuring the current load in the tap changer. From the measured values of the cooling and isolating media temperature and the current load, the contact temperature is calculated.

From the calculated contact temperature and the measured current load, the temperature of the A-spots located in the contact surface calculating. From said calculated temperature of the A-spots calculating, the ageing acceleration is calculated. The negative effect of large temperature variations is also taken into account. A maximum time period for the tap changer to be in the same position is then calculated from the calculated temperatures and the ageing acceleration.

In a preferred embodiment is the calculated maximum time period compared to an actual time period passed since the tap changer contact position last was changed.

In a preferred embodiment is a warning message provided if the actual time period exceeds the calculated maximum time period.

In a preferred embodiment is the calculated A-spot temperature compared to a predetermined A-spot temperature value. The predetermined A-spot value is individual for the specific tap changer.

In a preferred embodiment is the predetermined A-spot temperature value calculated with the Kohlrausch method.

In a preferred embodiment is a warning message provided if the calculated A-spot temperature exceeds the predetermined A-spot value.

In a preferred embodiment is a warning message provided if the calculated maximum temperature weighted time period exceeds a warning time limit.

In a preferred embodiment is an alarm message provided if the calculated maximum temperature weighted time period exceeds an alarm time limit.

The invention further relates to a computer program for calculating a maximum temperature weighted time period, during which time period a tap changer contact in a transformer is placed in the same position. The computer program comprises computer program code which, when run a computer media, performs the steps of receiving a measured value of a temperature of a cooling and isolating media surrounding the tap changer, receiving a measured value of a current load in the tap changer, calculating a contact temperature from the received measured values of the cooling and isolating media temperature and the current load, calculating a temperature of A-spots located in the contact surface from the calculated contact temperature and the received measured current load, calculating an ageing acceleration from the calculated temperature of the A-spots, calculating the maximum temperature weighted time period for the tap changer to be in the same position from the calculated temperatures and the ageing acceleration.

### Brief Description of the Drawings

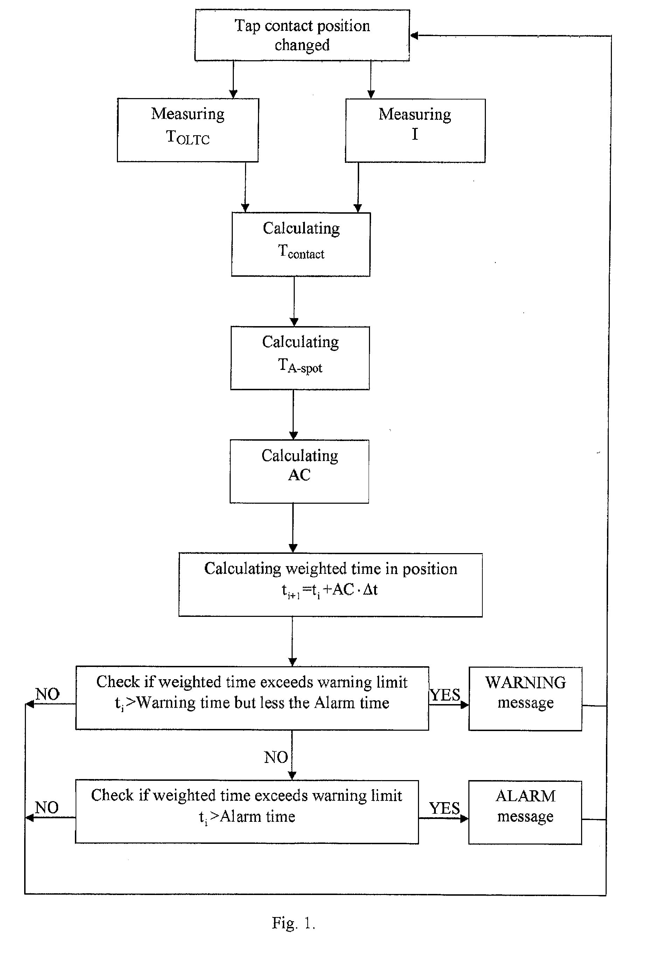

Figure 1 illustrates the workflow of the method according to the present invention.

### Detailed Description

As illustrated in Figure 1, the present method works as follows. At preset time steps the procedure starts. It is checked when a tap contact position is changed. The temperature of the cooling and isolating media surrounding the tap changer, T_{OLTC}, and the present current load, I, is measured. Often, transformer oil is used as cooling and isolating media but any other suitable cooling and isolating media may be used. Based on the measured values T_{OLTC} and I, the contact temperature T_{contact} is calculated. From the thus calculated T_{contact} can the temperature of the A-spots, T_{A-spots}, in the contact surface be calculated. The calculated T_{A-spots} is compared to a reference value of the A-spot temperature, and thereafter is an ageing acceleration factor AC due to the temperature calculated. From the values calculated above, is a maximum period of time for the tap changer to rest in the present position calculated. The A-spot reference temperature may be calculated with the Kohlrausch method or any other suitable calculation method. The thus calculated weighted time period is thereafter compared to a Warning limit time and an Alarm time. If the calculated weighted time period exceeds the Warning limit time but is below the Alarm limit time, a Warning message is generated. If the calculated weighted time period exceeds both the Warning time limit and the Alarm time limit, an Alarm message is generated.

Examples of contacts that may be subject to the method according to the present invention is diverter switch and selector switch main contacts in resistor type tap-changer; set of through-current-carrying contacts which has no transition impedance between the transformer winding and the contacts and does not switch any current, diverter switch and selector switch main switching contacts in resistor type tap-changer; set of contacts which has no transition impedance between the transformer winding and the contacts and makes and breaks current, diverter switch and selector switch transition contacts in resistor type tap-changer; set of contacts which is connected in series with a transition impedance and makes or breaks current, transfer contacts in reactor type tap-changer; set of contacts that makes or breaks current (please note that where by-pass contacts are not provided, the transfer contact is a continuous current-carrying contact), By-pass contacts (reactor type tap-changer); set of through-current-carrying contacts that commutates the current to the transfer contacts without any arc, bridging contacts; moveable current-carrying contacts that bridge between two fixed contacts when on-position. The method also takes into account different tap-changer designs in the calculation. Further, the calculation also takes into account if a contact remains in the same position although the current is now going through a different branch and a different contact of the tap-changer. The calculation also adjusts the acceleration if there are large temperature variations.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for calculating a maximum temperature weighted time period, during which time period a tap changer contact in a transformer is placed in the same position, said method comprising the steps of:
- measuring a temperature of a cooling and isolating media surrounding said tap changer,
- measuring a current load in said tap changer,
**characterised in that** it further comprises the steps of:
- calculating a contact temperature from the measured values of said cooling and isolating media temperature and said current load,
- calculating a temperature of A-spots located in the contact surface from said calculated contact temperature and said measured current load,
- calculating an ageing acceleration from said calculated temperature of the A-spots,
- calculating said maximum temperature weighted time period for the tap changer to be in the same position from said calculated temperatures and said ageing acceleration.

2. The method according to claim 1, wherein the calculated maximum time period is compared to an actual time period passed since the tap changer contact position last was changed.

3. The method according to claim 2, wherein a warning message is provided if the actual time period exceeds the calculated maximum time period.

4. The method according to any of the preceding claims, wherein said calculated A-spot temperature is compared to a predetermined A-spot temperature value, said predetermined A-spot value being individual for the specific tap changer.

5. The method according to claim 4, wherein said predetermined A-spot temperature value is calculated with the Kohlrausch method.

6. The method according to claim 4 or 5, wherein a warning message is provided if said calculated A-spot temperature exceeds the predetermined A-spot value.

7. The method according to any of the preceding claims, wherein a warning message is provided if said calculated maximum temperature weighted time period exceeds a warning time limit.

8. The method according to any of the preceding claims, wherein an alarm message is provided if said calculated maximum temperature weighted time period exceeds an alarm time limit.

9. A computer program for calculating a maximum temperature weighted time period, during which time period a tap changer contact in a transformer is placed in the same position, the computer program comprising computer program code which, when run a computer media, performs the steps of:
- receiving a measured value of a temperature of a cooling and isolating media surrounding said tap changer,
- receiving a measured value of a current load in said tap changer,
- calculating a contact temperature from the received measured values of said cooling and isolating media temperature and said current load,
- calculating a temperature of A-spots located in the contact surface from said calculated contact temperature and said received measured current load,
- calculating an ageing acceleration from said calculated temperature of the A-spots,
- calculating said maximum temperature weighted time period for the tap changer to be in the same position from said calculated temperatures and said ageing acceleration.
